# EUROPEAN PATENT SPECIFICATION

(11) **EP 4 478 226 B1**
(45) Date of publication and mention of the grant of the patent: **29.07.2026**
(21) Application number: 24181787.3
(22) Date of filing: 12.06.2024
(51) Int. Cl.: G06F 21/54, G06F 21/56, H04L 9/40, H04W 12/128

(54) **SYSTEM AND METHOD OF ANTI-VIRUS SCANNING OF OBJECTS ON A MOBILE DEVICE**
SYSTEM UND VERFAHREN ZUR ANTIVIRUSABTASTUNG VON OBJEKTEN AUF EINER MOBILEN VORRICHTUNG
SYSTÈME ET PROCÉDÉ DE BALAYAGE ANTIVIRUS D'OBJETS SUR UN DISPOSITIF MOBILE

(30) Priority: 13.06.2023 RU 2023115437; 27.03.2024 US 202418617763
(43) Date of publication of application: 18.12.2024
(73) Proprietor: AO Kaspersky Lab, Moscow 125212 (RU)
(72) Inventor: YABLOKOV, Victor V., 125212 MOSCOW (RU); FILATOV, Konstantin M., 125212 MOSCOW (RU)
(74) Representative: Chimini, Francesco

(56) References cited:
- US-A1- 2012 151 585
- US-B1- 8 387 141
- US-B1- 8 566 932
- US-B1- 9 479 357

## Description

### FIELD OF TECHNOLOGY

The present disclosure relates to the field of information security, and more specifically to systems and methods for ensuring the security applications on mobile devices by anti-virus scanning of objects on the mobile devices.

### BACKGROUND

Today, a mobile computing device (hereinafter referred to as a mobile device) has become an integral part of a person's (user's) life. Generally, most mobile devices contain various user data that is necessary for a person's daily life. Such data may be personal data, such as last name, first name, patronymic, year of birth, phone numbers, photos and videos, and/or confidential data, such as login and password to a personal account on a bank's website, or credit card number.

One of the most popular mobile platforms used on mobile devices is the Google Android operating system (hereinafter referred to as the Android OS). First of all, the Android OS has gained popularity as a result of it being open-source and free of charge, leading to its distribution across various hardware platforms and the creation of a large number of different applications for the operating system. To date, several million applications have already been created for the Android OS, which have been installed on more than two billion mobile devices around the world. At the same time, malware for mobile devices using Android have also become increasingly active. Malware for mobile devices means any software (hereinafter referred to as the Software) containing malicious code and/or designed to gain unauthorized access to the computing resources of mobile devices or to information stored on them, with the aim of utilizing resources without permission or causing harm to owners of mobile devices by copying, distorting, deleting or substituting information. In particular, information refers to the personal and confidential data of the owner of the mobile device. Examples of unauthorized use of mobile device resources include actions aimed at making unauthorized payments, sending messages containing spam, and calling premium numbers. Because installed applications on mobile devices may have access to sensitive user data in one way or another, it has become important to protect mobile devices and their apps from malware.

One of the solutions to ensure security on a mobile device is to use a special app, namely a mobile security app. A mobile security application is an application designed to detect malware and, depending on implementation, has different approaches for anti-virus scanning of objects on a mobile device. Mobile security applications tend to have an impact of a high load on resources of the mobile device, thereby affecting the mobile device during the fulfillment of its purposes. In particular, there is a need to use a large amount of permanent memory for the installation of the app itself and local databases, as well as RAM during operation. As a result, operating other apps on the mobile device and the mobile device itself as a whole becomes difficult.

Another disadvantage of mobile security apps is the limitations associated with the OS architecture for mobile devices - Android and iOS. In these operating systems, each application runs within an isolated environment, with access only to its own virtual storage.

An analysis of state of the art allows us to conclude that the use of current technologies is not sufficiently effective in ensuring the security of mobile applications, in particular, in the implementation of anti-virus scanning of objects on a mobile device with acceptable levels of resource consumption of the mobile device.

Therefore, there is a need for a method and a system that allow one to both ensure the security of mobile applications and to reduce the load on the resources of the mobile device.

US 8 566 932 B1 refers to a reputation-based automatic remediation is applied for enforcing good network hygiene of a client. US 2012/151585 A1 refers to a system for identifying malicious messages transmitted over a mobile communication network.

### SUMMARY

Aspects of the disclosure relate to systems and methods for enabling the security of applications on mobile devices while reducing the load on the resources of the mobile device. The security of mobile device applications is carried out by conducting an anti-virus scan of objects on the mobile device.

The invention is set out in the independent claims. Advantageous embodiments are defined in the dependent claims.

In one example, a method for anti-virus scanning of objects on a mobile device is disclosed, the method comprising: receiving, by a security module, a command from a protection module of a third-party application, to perform an anti-virus scan of an object using the security module; checking, by the security module, whether a mobile security application is installed or pre-installed on the mobile device; when the mobile security application is installed or preinstalled, determining whether the mobile security application is activated, and when the mobile security application is not activated, activating the mobile security application; when the mobile security application is not installed or pre-installed on the mobile device, installing and activating the mobile security application; transmitting, by the security module, the object to the mobile security application for performing an anti-virus scan of the object; performing an anti-virus scan of the object to determine whether the object is malicious; transmitting, by the security module, results of the anti-virus scan to a protection module of a third-party application; selecting, by the protection module, at least one response measure based on the result of the anti-virus scan; and applying, by the security module, at least one selected response measure.

In one example, the command to perform an anti-virus scan of the object is obtained after detecting suspicious activity and wherein the suspicious activity is associated with at least one object.

In one example, the suspicious activity is detected using a protection module using behavioral blockers or patterns of dangerous application behavior.

In one example, the command for performing the anti-virus scan of the object comprises at least the following information: a location of the object and a name of the object.

In one example, the object for performing the anti-virus scan comprises at least one of: a file; a link; a message text; a spam email; and a network package.

In one example, the activation and installation of the mobile security application is performed in one of the following ways: by providing a request to a user of the mobile device; in accordance with a group policy of the mobile device; and in automatic mode when installing the third-party application.

In one example, the anti-virus scan of the object is performed using at least one of the following: an interaction with a cloud security service; and a database located in the mobile security application.

In one example, the at least one response measure is aimed at securing the third-party application of the mobile device and include at least one of the following: removal of a malicious object; changing of access rights to the malicious object; placing the malicious object in a spam category; warning a user about a presence of the malicious object on the mobile device; quarantining of the malicious object; blocking incoming traffic by IP address; disconnecting the mobile device from the Internet; information support for the user of the mobile device when the malicious object is detected; changing settings of the mobile security application on the mobile device; blocking a click on a phishing link; updating an operating system or rolling back an operating system of the mobile device to factory settings; and updating the third-party application to a latest version.

In another example, a system is provided for anti-virus scanning of objects on a mobile device, the system comprising at least one memory; and at least one hardware processor coupled with the at least one memory and configured, individually or in combination, to: receive, by a security module, a command from a protection module of a third-party application, to perform an anti-virus scan of an object using the security module; check, by the security module, whether a mobile security application is installed or pre-installed on the mobile device; when the mobile security application is installed or pre-installed, determine whether the mobile security application is activated, and when the mobile security application is not activated, activate the mobile security application; when the mobile security application is not installed or pre-installed on the mobile device, install and activate the mobile security application; transmit, by the security module, the object to the mobile security application for performing an anti-virus scan of the object; perform an anti-virus scan of the object to determine whether the object is malicious; transmit, by the security module, results of the anti-virus scan to a protection module of a third-party application; select, by the protection module, at least one response measure based on the result of the anti-virus scan; and apply, by the security module, at least one selected response measure.

The technical result of the present method is to increase the security of information from third-party applications on a mobile device. This technical result is achieved through the system of the present disclosure, which is designed to ensure the security of an application on a mobile device.

US 8 566 932 B1 discloses a method, computer-implemented system, and computer program product in which a security module performs reputation-based automatic remediation for enforcing good network hygiene of a client. US 2012/151585 A1 discloses a system for identifying malicious messages transmitted over a mobile communication network. US 8 387 141 B1 discloses a system for protecting a mobile device against malware or harmful communications via calls and SMSs. US 9 479 357 B1 discloses a computer-implemented method and a system for detecting a malicious application on a mobile device.

### BRIEF DESCRIPTION OF THE DRAWINGS

The accompanying drawings, which are incorporated into and constitute a part of this specification, illustrate one or more examples of the present disclosure and, together with the detailed description, serve to explain their principles and implementations.
**Fig. 1** illustrates a block diagram of an exemplary application security system for antivirus scanning of objects on a mobile device.
**Fig. 2** illustrates an example of a method for anti-virus scanning of objects on a mobile device.
**Fig. 3** illustrates an example implementation of a method for anti-virus scanning of objects on a mobile device.
**Fig. 4** presents an example of a general-purpose computer system on which examples of the present disclosure for anti-virus scanning of objects on a mobile device can be implemented.

### DETAILED DESCRIPTION

Exemplary embodiments are described herein in the context of a system and method for anti-virus scanning of objects on a mobile device. Those of ordinary skill in the art will realize that the following description is illustrative only and is not intended to be in any way limiting. Other examples will readily suggest themselves to those skilled in the art having the benefit of the disclosure. Reference will now be made in detail to implementations of the examples as illustrated in the accompanying drawings. The same reference indicators will be used to the extent possible throughout the drawings and the following description to refer to the same or like items.

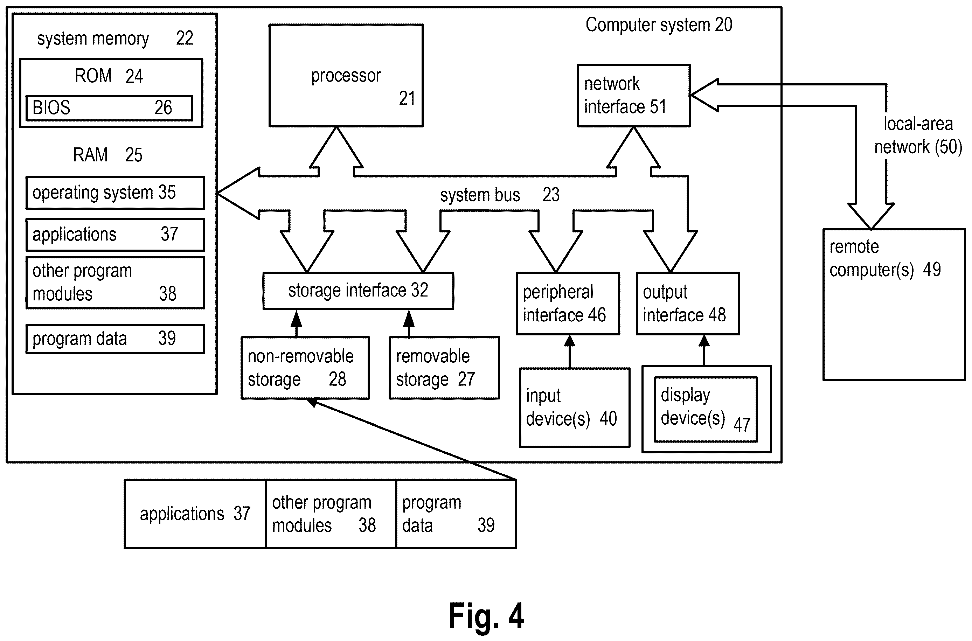

In some examples, the system for classifying objects to prevent the spread of malicious activity may be implemented on the processor of a general-purpose computer (which, for example, is depicted in **Fig. 4****).** In this case, the components of the system may be realized within a single computing device, or distributed amongst several interconnected computing devices. The present disclosure describes a technical solution for anti-virus scanning of objects on a mobile device.

The method of the present disclosure provides a technical solution for ensuring the security of mobile applications and the mobile device as a whole by using a security module in a third-party application. At the same time, the method of the present disclosure allows to reduce the load on the resources of the mobile device while implementing the security of the mobile device.

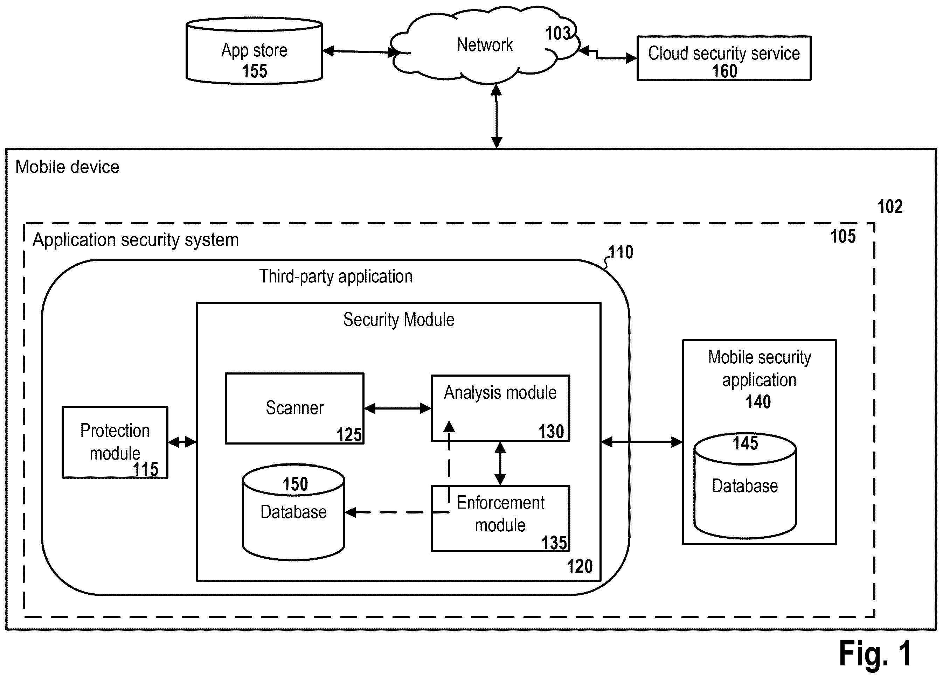

**Fig. 1** illustrates a block diagram of an exemplary application security system for antivirus scanning of objects on a mobile device.

In one example, the application security system **105** is implemented on the mobile device **102** and includes at least one third-party application **110** and a mobile security application **140** comprising a database **145.** In turn, the third-party application **110** includes a protection module **115** and a security module **120,** wherein the security module **120** consists of a scanner **125,** an analysis module **130,** an enforcement module **135,** and a database **150.**

The security module **120** is an embedded component within the third-party application **110** and is designed to provide protection against malicious activity by the third-party application **110.** Depending on the implementation, the security module **120** may be either an integral part of the third-party application **110** or an independent module embedded in the third-party application **110.**

The mobile device **102** comprises at least a computing device, such as a smartphone, tablet, smartwatch, handheld game console, personal navigation device, and data receiving terminal. Another example of a computing device is the computer system shown in **Fig. 4****.**

The third-party application **110** comprises third-party software designed to work on smartphones, tablets and other mobile devices, developed for a specific platform (Android, Windows Phone, iOS, etc.), but not intended for anti-virus scanning of objects.

The protection module **115** located in the third-party application **110** is designed to monitor the activity of the third-party application **110** in order to detect suspicious activity, and objects related to the detected suspicious activity.

The object, in particular, comprises objects such as:
- files;
- references;
- message texts;
- spam emails; or
- network packages.

Examples of activity are activities such as: downloading a file, opening a file, or clicking on a link.

In one example, the protection module **115** monitors the activity of the third-party application **110,** using behavioral blockers or patterns of dangerous application behavior. For example, if the activity of the third-party application **110** matches one of the patterns of dangerous behavior or if a suspicious activity is detected, the protection module **115** detects such activity as suspicious, detects at least one object associated with the specified activity, and prohibits further actions with the detected object by applying a block. It is worth noting that when implementing a third-party application **110,** the protection module **115** may use other approaches known in the art to control the activity of the third-party application **110.** Next, the protection module **115** transmits a command to perform an anti-virus scan of the detected object associated with suspicious activity to the security module **120.** The command to perform an object scan contains at least the following information: the location of the object (for example, the path to the file) and the name of the object.

The following are examples of protection modules **115** when implemented in various third-party applications **110.**

In one example, in a third-party application **110,** e.g., a banking application provided by financial institutions for remote interaction, the protection module **115** is responsible for monitoring transactions for unauthorized access to customer data, e.g., credit card data on the mobile device **102** by identifying the program that initiates the execution of transactions, the URL of the transaction acceptance, and applying filters (e.g., validator filters, stop list filters, authorization limit filters). For example, unauthorized access to the credit card data may occur as a result of the Trojan-Banker.AndroidOS.Faketoken. This Trojan displays fake forms for collecting the credit card data on top of the banking (third-party) application **110,** thereby stealing the credit card data (i.e. card number, PIN code, CVV). Among other things, Trojan-Banker. AndroidOS. Faketoken intercepts all incoming SMS passwords on the mobile device **102** and transmits them to the attackers' servers. If the Trojan is suspected of intercepting data, the protection module **115** on the mobile device **102** intercepts the suspicious activity and sends at least one command to perform an anti-virus scan of the object determined as "the application file whose window is currently active" associated with the suspicious activity to the security module **120.** The security module **120** requests permission from the third-party application **110** to perform its functionality in the third-party application **110.**

In another example, in a third-party application **110,** such as an instant messenger, the protection module **115** is responsible for monitoring incoming messages for spam and the attached links for phishing, and analyzing downloaded files for maliciousness. In the event that spam, phishing, or a malicious object (file) is detected, the protection module **115** intercepts suspicious activity and transmits at least one command to perform an anti-virus scan of the spam email, the phishing link, or the file object associated with the suspicious activity to the security module **120.** The security module **120** requests permissions from the third-party application **110** to perform its functionality in the third-party application **110.** Before the security module **120** performs an antivirus scan of the object, the protection module **115** may remove all personal data from the message, such as mentioning of names, e-mail addresses, and other personal data.

The security module **120,** which is a component of the third-party application **110,** is designed to perform an anti-virus scan of an object corresponding to the command received from the protection module **115** in order to identify a malicious object. The security module **120** has limited functionality and capabilities for anti-virus scanning of objects compared to the mobile security application **140.** For example, the security module **120** may have only one of the following types of scanning, and each type of scan may have a limited implementation: a scanning wherein there is no ability to emulate files or run in a restricted environment (sandbox); a scanning in which the size of databases for checking a hash sum or a digital signature of a file is limited,; and, a scanning in which the functionality of the security module **120** is limited only to working with executable files assembled without the use of programs, such as executable packers. An executable packer refers to a program for reducing the size of executable files. When packers are used, a compressed copy of the original file and a program for decompression are written to the packaged file. As a result of the limited functionality and capabilities, the security module **120** requires less CPU and RAM resources than the mobile security app **140.** In yet another example, the security module **120** has only the ability to search for and/or install on the mobile device **102** of an application designed to perform an anti-virus security scan, such as the mobile security application **140.**

Upon receipt of an object associated with suspicious activity, in order to perform an antivirus scan, the security module **120** uses the scanner **125** to scan for the presence of a mobile security application **140.** The scanner **125** verifies that the mobile security application **140** is installed or pre-installed on the mobile device **102** by calling the Application Programming Interface (API) set of functions, and by:
- when the mobile security application **140** is pre-installed or installed on the mobile device **102,** checking whether the mobile security application **140** is activated, and when the preinstalled or installed application is not activated, activating the pre-installed or installed mobile security application **140;** and
- when the mobile security application **140** is not installed or pre-installed from the mobile device **102,** the mobile security application **140** is installed and activated.

The scanner **125,** upon detecting the installed or pre-installed but not activated mobile security application **140,** informs the security module **120** that the detected mobile security application **140** should be activated. The security module **120** activates the mobile security application **140** by interacting with a user of the mobile device **102,** or automatically if the security module **120** has the appropriate permissions on the mobile device **102.** For example, the security module **120** may send a request to the user, wherein the request contains information about the presence of the mobile security application **140** installed on the mobile device **102** and whether it needs to be activated and waits for an activation response. The request is sent to the user using data input/output interfaces. Once the mobile security application **140** is activated, the security module **120** communicates with the activated mobile security application **140.** In another example, the security module **120** initiates the activation process of the security application **140** by making a security application window **140** active so that the user can perform all the necessary actions for activation (e.g., entering of the activation code, read the license agreement, and the like).

In the absence of the mobile security application **140,** the scanner **125** informs the security module **120** to install and activate the mobile security application **140.** In one example, installation of the mobile security application **140** is accomplished by prompting the user of the mobile device **102.** The scanner **125** over the network **103** detects an available app store **155** and sends a request to install the mobile security application **140** to the user of the mobile device **102.** The particular app store **155** depends on the OS type of the mobile device **102,** for Android - Google Play, RuStore, Samsung Galaxy Store, Xiaomi Mi GetApps, etc., for iOS - App Store, etc. In one example, the request to install the mobile security application **140** may be implemented using a mailbox and SMS messages on the mobile device **102.** For example, the security module **120** may send an email or SMS message containing a link to the app storefront of the mobile security application **140** or may send the mobile security application **140** as an attachment. In the event that there is no security mobile app **140** in the app store **155,** or no app store **155** is available for the mobile device **102,** the request may contain a permission to install the mobile security application **140** from the Internet (e.g., for Android, this will be a link to the APK file). Once the mobile security app **140** is installed, activation is performed in one of the previously listed ways.

In one example, the installation and activation of the mobile security application **140** is performed in accordance with the Group Policy of the mobile device **102.** Mobile device Group Policy should be understood as a single set of settings for managing mobile devices that are part of an administration group, as well as mobile applications installed on devices. For example, in a corporate or local network a list of mobile applications is installed and activated on a mobile device **102** according to the Group Policy. This installation and activation occurs after the mobile device is turned on, rebooted, or updated.

In another example, the installation and activation of the mobile security application **140** may be performed automatically. For example, when a third-party application **110** is installed, the mobile security application **140** is additionally installed by default on the mobile device **102.**

In the event that the mobile security application **140** is not installed on the mobile device **102** or is installed but not activated, and there is no option for activation, the security module **120** performs an inspection of the object itself using the analysis module **130.**

In this way, the security module **120** transmits an object to perform the check:
- to the mobile security application **140** in the event that the mobile security application **140** is installed and activated on the mobile device **102;** and
- to the analysis module **130** in the event that the mobile security application **140** is not installed or is installed but not activated, and there is no activation option on the mobile device **102.**

In one example, the security module **120** passes the scan object to the mobile security application **140.** The mobile security application **140** performs an anti-virus scan of an object for compliance with a malicious object. A malicious object comprises an object created with the help of malicious code designed to gain unauthorized access to information or resources of a device of the user, in particular, the mobile device **102.** An example of a mobile security application **140** is Kaspersky Lab's Kaspersky Total Security product, specifically for mobile devices.

The mobile security application **140,** as compared to the security module **120,** has no limitations in its functionality for anti-virus scanning of objects, and also has access to the cloud security service **160.** Depending on the implementation options, the inspection of the object is performed either by the mobile security application **140** itself or by the cloud security service **160,** and may include signature-based or heuristic scanning of information about object code fragments, the use of behavioral analyzers, as well as the use of online services that analyze suspicious files, and sandboxes. In one example, the mobile security application **140** performs an anti-virus scan of an object using a cloud security service **160** (e.g., Kaspersky Security Network) over the network **103.**

In another example, the mobile security application **140** performs an inspection of an object using a database **145.** In one example, database **145** stores at least signatures, heuristics, and file hashes. Inspection of the object by the mobile security application **140** using the database **145** includes signature and heuristic scanning (analysis) of the object's code, the use of behavioral analyzers. The results of the scanning of the object are transmitted by the mobile security application **140** to the protection module **115** using the security module **120.**

As previously stated, in the event that the mobile security application **140** is not installed or is installed but not activated on the mobile device **102,** the security module **120** performs an inspection of the object using the analysis module **130** and the database **150.** The analysis module **130** performs an inspection of the object using signatures from the database **150.** The results of the object inspection are transmitted by the analysis module **130** to the protection module **115.**

In one example, the security module **120** further checks for permissions in the third-party application **110** to perform self-inspection of the object. For example, the security module **120** may be embedded in a third-party "mobile game" application **110** and may not have sufficient permissions. For example, the security module **120** may not have permissions to access components such as: speaker, contacts, calendar, device location, messages on the device, Wi-Fi connection data. Therefore, the inspection of the third-party application object **110** by the analysis module **130** in the security module **120** may be incomplete or impossible due to insufficient permissions. In another example, the security module **120** may be located in a third-party application **110,** with system level preferences. Thus, on the mobile device **102,** the security module **120** may have sufficient number of permissions, as the system app has unrestricted access to the entire mobile device. The analysis module **130** independently inspects the object of the third-party application **110.** The results of the object inspection are transmitted by the analysis module **130** to the protection module **115.**

Based on the test results obtained from the security module **120,** the protection module 115 selects response measures, if necessary. A list of exemplary measures is given below.

The response measures to secure the third-party application **110** of the mobile device 102 selected by the protection module **115** include at least one of the following:
- removing of a malicious object;
- changing of access rights to a malicious object;
- placing a malicious object in the spam category;
- warning the user about the presence of a malicious object on the mobile device **102;**
- quarantining of a malicious object;
- blocking incoming traffic by IP address;
- disconnecting the mobile device **102** from the Internet;
- providing information support for the user of the mobile device **102** when a malicious object is detected;
- changing the settings of the mobile security app on the mobile device **102;**
- blocking the click on a phishing link;
- updating the operating system or rolling back mobile device **102** to factory settings; and
- updating the third-party application **110** to the latest version.

The protection module **115** transmits a command to the security module **120** to execute one or more of the selected response measures. The security module **120,** using the enforcement module **135,** executes the response measures selected by the protection module **115.** For example, the results of the scanning may reveal a malicious object - a phishing link in an SMS message; then, the protection module **115** may select the following responses: alerting the user of the mobile device **102** to the presence of the phishing link, and blocking the click on the phishing link.

In one example, based on the results of the inspection of the results of the analysis module **130,** the enforcement module **135** may immediately apply the response measures.

**Table-1** provides examples of response measures stored in the database **150** that are used when an anti-virus scan identifies a relevant malicious object.

**Table 1**

| Malicious Objects | Response |
|---|---|
| File | Deleting a file; changing access rights to a file; quarantining a file. |
| Reference | Removal of the link; warning the user of the mobile device **102** about the presence of a phishing link; informing the user about the prohibition of clicking on the link or marking the sender of the link as an "untrusted user"; blocking the click on a phishing link. |
| Text | Placing text in the spam category. |
| Network Package | Blocking incoming traffic by IP address; blocking network packets using firewall rules. |

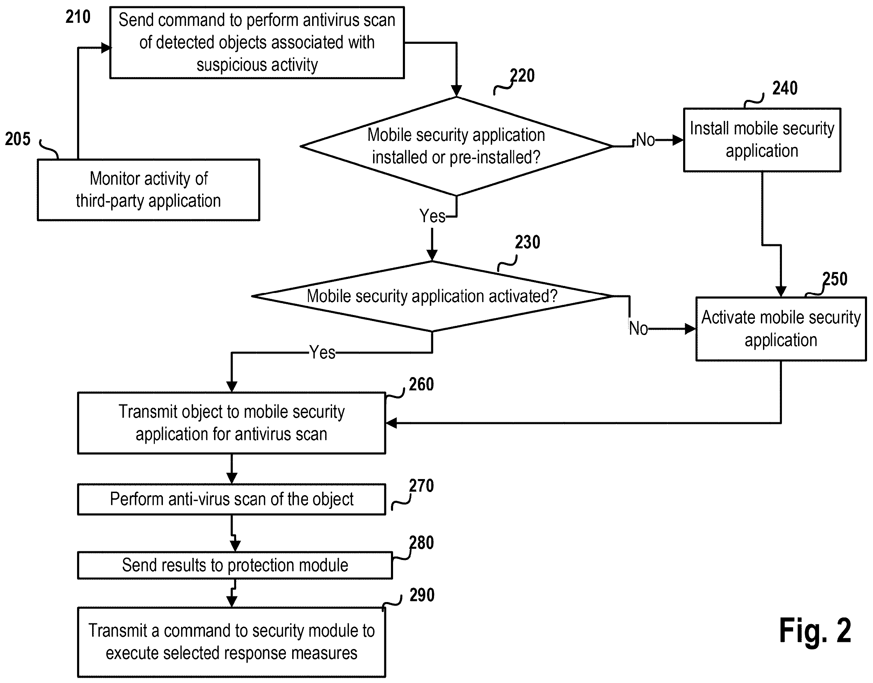

**Fig. 2** illustrates an example of a method **200** for anti-virus scanning of objects on a mobile device. In one example, method **200** is implemented using the security system of application **105** provided in conjunction with the description of **Fig. 1****.**

In step **205,** by the protection module **115,** method **200** monitors the activity of the third-party application **110** in order to detect a suspicious activity and one or more objects associated with the detected suspicious activity. Examples of the suspicious activity are downloading a file from an unknown IP address, receiving a message from an unknown sender, and so on.

In step **210,** by the protection module **115,** method **200** sends a command to the security module **120** to perform an anti-virus scan of the detected object associated with the suspicious activity. In one example, the command to perform an anti-virus scan of an object contains at least the following information: a location of the object (for example, the path to the file) and a name of the object.

In step **220,** after the security module **120** is instructed to perform an anti-virus scan of the identified object associated with suspicious activity, by the scanner **125,** method **200** performs a scan of the object for a presence of a mobile security application **140.** The scanner **125** verifies that the mobile security application **140** is installed or pre-installed on a mobile device by calling the necessary API functions. If the scanner **125** detects that the mobile security application **140** is installed or pre-installed, method **200** proceeds to step **230.** In the event that the mobile security application **140** is not present on the mobile device **102,** then method **200** proceeds to step **240.**

In step **230,** the scanner **125** verifies whether the installed or preinstalled mobile security application **140** is activated. If the mobile security application **140** is not activated, then method **200** proceeds to step **250.** In the event that the mobile security application **140** is activated, then method **200** proceeds to the step **260.**

In step **240,** the scanner **125** informs the security module **120** to install the mobile security application **140.** In one example, the installation of the mobile security application **140** is accomplished by providing a request to the user of the mobile device **102.** Using the scanner **125** over the network **103,** method **200** locates an available app store **155** and sends a request for the installation of the mobile security application **140** to the user of the mobile device **102.** The request to install the mobile security application **140** is sent using the mailbox and SMS messages on the mobile device **102.** With the help of the security module **120,** method **200** sends a letter to the mailbox or an SMS message containing a link to the showcase of the mobile security application **140** or an attached file of the mobile security application **140.** In the absence of a mobile security application **140** in the app store **155,** or in the absence of an app store **155** on mobile device **102,** the request comprises a request to authorize an installation of the mobile security application **140** from the Internet (e.g., for Android, this will be a link to the APK file).

In step **250,** by the security module **120,** method **200** activates the mobile security application **140** by interacting with the user of the mobile device **102** or automatically, if the security module **120** has the appropriate permissions on the mobile device **102.** For example, a request may be sent to the user using the security module **120,** wherein the request contains information about the presence of the installed mobile security application **140** on the mobile device **102** and whether it needs to be activated and waits for an activation response. In another example, the security module **120** initiates the activation process of the security application **140** by making the security application window **140** active so that the user can perform all necessary actions for activation.

In one example, the installation and activation of the mobile security application **140** is performed in accordance with the Group Policy of the mobile device **102.** For example, in a corporate or local area network, a list of mobile applications is installed and activated on mobile device **102** according to Group Policy.

In another example, the installation and activation of the mobile security application **140** is performed automatically. For example, when a third-party application **110** is installed, the mobile security application **140** is additionally installed on the default mobile device **102.**

In step **260,** by the security module **120,** method **200** transmits the object to the mobile security application **140** to perform an antivirus scan. Using the mobile security application **140,** method **200** performs an anti-virus scan of the object for compliance with the malicious object. A malicious object should be understood as an object created with the help of malicious code aimed at obtaining unauthorized access to information or resources of the user's device, in particular the mobile device **102.**

In step **270,** an anti-virus scan of the object is performed using the mobile security application **140.** In one example, the scanning is performed by interacting with a cloud security service **160** (e.g., Kaspersky Security Network) over the network **103.** In one example, the scanning of an object using a cloud security service **160** includes signature-based and heuristic scanning of information about object code fragments, the use of behavioral analyzers, as well as the use of online services that analyze suspicious files, and sandboxes.

In another example, the mobile security application **140** uses the database **145** to perform an object inspection. Verification of the object by the mobile security application **140** using the database **145** includes, in particular, signature and heuristic scanning of information about fragments of the object's code, the use of behavioral analyzers.

In step **280,** by the mobile security application **140,** method **200** transmits the test results to the protection module **115** via the security module **120.** With the help of the protection module **115,** based on the results of the anti-virus scan from the security module **120,** the response measures are selected, if necessary.

In step **290,** by the protection module **115,** method **200** transmits a command to the security module **120** to execute the selected response measures. The security module **120,** using the enforcement module **135,** executes the response measures selected by the protection module **115.** In the special case of implementation of method **200,** the response measures are immediately applied based on the results of the scanning.

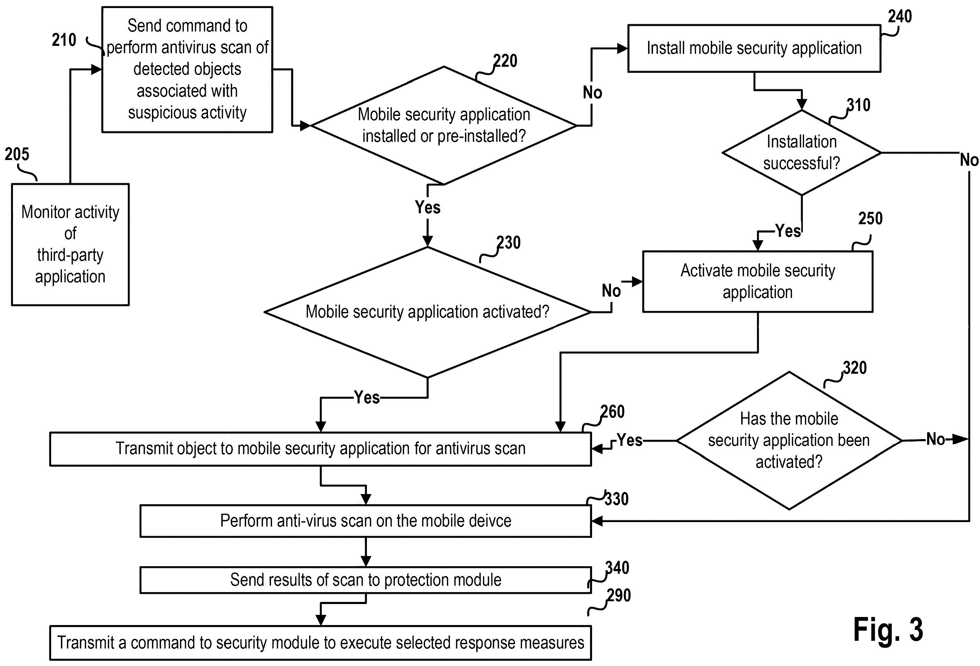

**Fig. 3** illustrates an example implementation of a method **300** for anti-virus scanning of objects on a mobile device.

In one example, method **300** is implemented using the security features of application security system **105,** as described in **Fig. 1****,** and method **300** complements the method **200** presented in conjunction with the description of **Fig. 2****.** Thus, the steps **205, 210, 220, 230, 240, 250, 260** and **290** shown in **Fig. 3****.** are the same steps shown in **Fig. 2****.**

In step **310,** by the scanner **125,** method **300** verifies that the mobile security application is installed in step **240.** If the mobile security application **140** is installed, then method **300** proceeds to step **320.** In the event that the mobile security application **140** is not installed on the mobile device **102,** then method **300** proceeds to step **330.**

In step **320,** by the scanner **125,** method **300** verifies that the mobile security application **140** has been activated in step **250.** In the event that the mobile security application **140** is not activated, then, method **300** proceeds to step **330.** In the event that the mobile security application **140** is activated, method **300** proceeds to step **260.**

In step **330,** if the mobile security application **140** is not installed or is installed but not activated, and there is no option for activation method **300,** by the analysis module **130,** performs an antivirus scan on the mobile device **102** using signatures from the database **150.** In the event that the mobile security application **140** is successfully activated, see the description of step **270** in **Fig.** 2.

In step **340,** by the component that performed antivirus scan in step **330** (i.e. the mobile security application **140** or the analysis module **130),** method **300** transmits the results of the scan to the protection module **115** via the security module **120.** With the help of the protection module **115,** based on the results of the anti-virus scan from the security module **120,** the response measures are selected, if necessary.

**Fig. 4** is a block diagram illustrating a computer system 20 on which examples of systems and methods for anti-virus scanning of objects on a mobile device may be implemented. The computer system 20 can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I²C, and other suitable interconnects. The central processing unit 21 (also referred to as a processor) can include a single or multiple sets of processors having single or multiple cores. The processor 21 may execute one or more computerexecutable code implementing the techniques of the present disclosure. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices.

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

Aspects of the present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform examples of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a specialpurpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in Fig. 4 above). Accordingly, each module may be realized in a variety of suitable configurations, and should not be limited to any particular implementation exemplified herein.

## Claims

1. A computer-implemented method for anti-virus scanning of objects on a mobile device (102), performed by a mobile security application (140) and a third-party application (110), both running on the mobile device (102), wherein the third-party application (110) comprises a protection module (115) and a security module (120), the method comprising:
receiving, by the security module (120) of the third-party application, a command from the protection module (115) of the third-party application (110), to perform an anti-virus scan of an object using the security module (120);
checking, by the security module (120), whether the mobile security application (140) is installed or pre-installed on the mobile device (102);
when the mobile security application (140) is installed or pre-installed, determining whether the mobile security application (140) is activated, and when the mobile security application (140) is not activated, activating the mobile security application (140);
when the mobile security application (140) is not installed or pre-installed on the mobile device (102), installing and activating the mobile security application (140); transmitting, by the security module (120), the object to the mobile security application (140) for performing an anti-virus scan of the object;
when the mobile security application (140) is installed but not activated, and there is no option for activation, performing an anti-virus scan of the object using the security module (120) of the third-party application (110);
transmitting, by the security module (120), results of the anti-virus scan to the protection module (115) of the third-party application (110);
selecting, by the protection module (115), at least one response measure based on the result of the anti-virus scan; and
applying, by the security module (120), at least one selected response measures.

2. The method according to claim 1, wherein the command to perform an anti-virus scan of the object is obtained after detecting suspicious activity and wherein the suspicious activity is associated with at least one object.

3. The method according to claim 2, wherein the suspicious activity is detected using the protection module (115) using behavioral blockers or patterns of dangerous application behavior.

4. The method according to any of claims 1 to 3, wherein the command for performing the anti-virus scan of the object comprises at least the following information: a location of the object and a name of the object.

5. The method according to any of claims 1 to 4, wherein the object for performing the anti-virus scan comprises at least one of:
a file;
a link;
a message text;
a spam email; and
a network package.

6. The method according to any of claims 1 to 5, wherein the activation and installation of the mobile security application (140) is performed in one of the following ways:
by providing a request to a user of the mobile device;
in accordance with a group policy of the mobile device; and
in automatic mode when installing the third-party application.

7. The method according to any of claims 1 to 6, wherein the anti-virus scan of the object is performed using at least one of the following:
an interaction with a cloud security service (160); and
a database (145) located in the mobile security application (140).

8. The method according to any of claims 1 to 7, wherein the at least one response measure is aimed at securing the third-party application (110) of the mobile device (102) and include at least one of the following:
removal of a malicious object;
changing of access rights to the malicious object;
placing the malicious object in a spam category;
warning a user about a presence of the malicious object on the mobile device;
quarantining of the malicious object;
blocking incoming traffic by IP address;
disconnecting the mobile device from the Internet;
information support for the user of the mobile device when the malicious object is detected;
changing settings of the mobile security application (140) on the mobile device;
blocking a click on a phishing link;
updating an operating system or rolling back an operating system of the mobile device to factory settings; and
updating the third-party application (110) to a latest version.

9. A system for anti-virus scanning of objects on a mobile device (102), comprising a third party third-party application (110) and a mobile security application (140), both running on the mobile device (102), wherein the third-party application (110) comprises a protection module (115) and a security module (120), the system comprising:
at least one memory; and
at least one hardware processor coupled with the at least one memory and configured, individually or in combination, to:
receive, by the security module (120), a command from the protection module (115) of the third-party application (110), to perform an anti-virus scan of an object using the security module (120);
check, by the security module (120), whether the mobile security application (140) is installed or pre-installed on the mobile device;
when the mobile security application (140) is installed or pre-installed, determine whether the mobile security application (140) is activated, and when the mobile security application (140) is not activated, activating the mobile security application (140);
when the mobile security application (140) is not installed or pre-installed on the mobile device, install and activating the mobile security application (140);
transmit, by the security module (120), the object to the mobile security application (140) for performing an anti-virus scan of the object;
when the mobile security application (140) is installed but not activated, and there is no option for activation, perform an anti-virus scan of the object using the security module (120) of the third-party application (110);
transmit, by the security module (120), results of the anti-virus scan to the protection module (115) of the third-party application (110);
select, by the protection module (115), at least one response measure based on the result of the anti-virus scan; and
apply, by the security module (120), at least one selected response measures.

10. The system according to claim 9, wherein the command to perform an anti-virus scan of the object is obtained after detecting suspicious activity and wherein the suspicious activity is associated with at least one object.

11. The system according to any of claims 9 to 10, wherein the suspicious activity is detected using the protection module using behavioral blockers or patterns of dangerous application behavior.

12. The system according to any of claims 9 to 11, wherein the command for performing the anti-virus scan of the object comprises at least the following information: a location of the object and a name of the object.

13. The system according to any of claims 9 to 12, wherein the object for performing the anti-virus scan comprises at least one of:
a file;
a link;
a message text;
a spam email; and
a network package.

14. The system according to any of claims 9 to 13, wherein the activation and installation of the mobile security application (140) is performed in one of the following ways:
by providing a request to a user of the mobile device;
in accordance with a group policy of the mobile device; and
in automatic mode when installing the third-party application.

15. The system according to any of claims 9 to 14, wherein the at least one response measure is aimed at securing the third-party application (110) of the mobile device (102) and include at least one of the following:
removal of a malicious object;
changing of access rights to the malicious object;
placing the malicious object in a spam category;
warning a user about a presence of the malicious object on the mobile device;
quarantining of the malicious object;
blocking incoming traffic by IP address;
disconnecting the mobile device from the Internet;
information support for the user of the mobile device when the malicious object is detected;
changing settings of the mobile security application on the mobile device;
blocking a click on a phishing link;
updating an operating system or rolling back an operating system of the mobile device to factory settings; and
updating the third-party application (110) to a latest version.

## Patentansprüche

1. Computerimplementiertes Verfahren zur Antivirusabtastung von Objekten auf einer mobilen Vorrichtung (102), das von einer mobilen Sicherheitsanwendung (140) und einer Drittanbieteranwendung (110) durchgeführt wird, die beide auf der mobilen Vorrichtung (102) laufen, wobei die Drittanbieteranwendung (110) ein Schutzmodul (115) und ein Sicherheitsmodul (120) umfasst, wobei das Verfahren umfasst:
Empfangen eines Befehls von dem Schutzmodul (115) der Drittanbieteranwendung (110) durch das Sicherheitsmodul (120) der Drittanbieteranwendung, um eine Virenprüfung eines Objekts unter Verwendung des Sicherheitsmoduls (120) durchzuführen;
Prüfen durch das Sicherheitsmodul (120), ob die mobile Sicherheitsanwendung (140) auf der mobilen Vorrichtung (102) installiert oder vorinstalliert ist;
wenn die mobile Sicherheitsanwendung (140) installiert oder vorinstalliert ist, Bestimmen, ob die mobile Sicherheitsanwendung (140) aktiviert ist, und wenn die mobile Sicherheitsanwendung (140) nicht aktiviert ist, Aktivieren der mobilen Sicherheitsanwendung (140);
wenn die mobile Sicherheitsanwendung (140) nicht auf der mobilen Vorrichtung (102) installiert oder vorinstalliert ist, Installieren und Aktivieren der mobilen Sicherheitsanwendung (140);
Übertragen des Objekts durch das Sicherheitsmodul (120) an die mobile Sicherheitsanwendung (140), um eine Virenprüfung des Objekts durchzuführen;
wenn die mobile Sicherheitsanwendung (140) installiert, aber nicht aktiviert ist und keine Option zur Aktivierung vorhanden ist, Durchführen einer Virenprüfung des Objekts unter Verwendung des Sicherheitsmoduls (120) der Drittanbieteranwendung (110);
Übertragen der Ergebnisse der Virenprüfung durch das Sicherheitsmodul (120) an das Schutzmodul (115) der Drittanbieteranwendung (110);
Auswählen mindestens einer Reaktionsmaßnahme durch das Schutzmodul (115) auf der Grundlage des Ergebnisses der Virenprüfung; und
Anwenden mindestens einer ausgewählten Reaktionsmaßnahme durch das Sicherheitsmodul (120).

2. Verfahren nach Anspruch 1, wobei der Befehl zur Durchführung einer Virenprüfung des Objekts nach dem Erkennen einer verdächtigen Aktivität erhalten wird und wobei die verdächtige Aktivität mit mindestens einem Objekt in Verbindung steht.

3. Verfahren nach Anspruch 2, wobei die verdächtige Aktivität unter Verwendung des Schutzmoduls (115) mithilfe von Verhaltensblockern oder Mustern gefährlichen Anwendungsverhaltens erkannt wird.

4. Verfahren nach einem der Ansprüche 1 bis 3, wobei der Befehl zur Durchführung der Virenprüfung des Objekts mindestens die folgenden Informationen umfasst: einen Speicherort des Objekts und einen Namen des Objekts.

5. Verfahren nach einem der Ansprüche 1 bis 4, wobei das Objekt zur Durchführung der Virenprüfung mindestens eines umfasst von:
einer Datei;
einem Link;
einem Nachrichtentext;
einem Spam-E-Mail; und
einem Netzwerkpaket.

6. Verfahren nach einem der Ansprüche 1 bis 5, wobei die Aktivierung und Installation der mobilen Sicherheitsanwendung (140) auf eine der folgenden Weisen durchgeführt wird:
durch Bereitstellen einer Aufforderung an einen Benutzer der mobilen Vorrichtung;
gemäß einer Gruppenrichtlinie der mobilen Vorrichtung; und
im automatischen Modus bei der Installation der Drittanbieteranwendung.

7. Verfahren nach einem der Ansprüche 1 bis 6, wobei die Virenprüfung des Objekts unter Verwendung von mindestens einem von Folgendem durchgeführt wird:
einer Interaktion mit einem Cloud-Sicherheitsdienst (160); und
einer Datenbank (145), die sich in der mobilen Sicherheitsanwendung (140) befindet.

8. Verfahren nach einem der Ansprüche 1 bis 7, wobei die mindestens eine Reaktionsmaßnahme darauf abzielt, die Drittanbieteranwendung (110) der mobilen Vorrichtung (102) zu sichern, und mindestens eines von Folgendem umfasst:
Entfernen eines schädlichen Objekts;
Ändern der Zugriffsrechte auf das schädliche Objekt;
Einordnen des schädlichen Objekts in eine Spam-Kategorie;
Warnen eines Benutzers vor dem Vorhandensein des schädlichen Objekts auf der mobilen Vorrichtung;
Isolieren des schädlichen Objekts;
Blockieren des eingehenden Datenverkehrs nach IP-Adresse;
Trennen der mobilen Vorrichtung vom Internet;
Informationsunterstützung für den Benutzer der mobilen Vorrichtung, wenn das schädliche Objekt erkannt wird;
Ändern der Einstellungen der mobilen Sicherheitsanwendung (140) auf der mobilen Vorrichtung;
Blockieren eines Klicks auf einen Phishing-Link;
Aktualisieren eines Betriebssystems oder Zurücksetzen eines Betriebssystems der mobilen Vorrichtung auf die Werkseinstellungen; und
Aktualisieren der Drittanbieteranwendung (110) auf eine neueste Version.

9. System zur Antivirusabtastung von Objekten auf einer mobilen Vorrichtung (102), das eine Drittanbieteranwendung (110) und eine mobile Sicherheitsanwendung (140) umfasst, die beide auf der mobilen Vorrichtung (102) laufen, wobei die Drittanbieteranwendung (110) ein Schutzmodul (115) und ein Sicherheitsmodul (120) umfasst, wobei das System umfasst:
mindestens einen Speicher; und
mindestens einen Hardware-Prozessor, der mit dem mindestens einen Speicher gekoppelt und einzeln oder in Kombination konfiguriert ist zum:
Empfangen eines Befehls von dem Schutzmodul (115) der Drittanbieteranwendung (110) durch das Sicherheitsmodul (120), um eine Virenprüfung eines Objekts unter Verwendung des Sicherheitsmoduls (120) durchzuführen;
Prüfen durch das Sicherheitsmodul (120), ob die mobile Sicherheitsanwendung (140) auf der mobilen Vorrichtung installiert oder vorinstalliert ist;
wenn die mobile Sicherheitsanwendung (140) installiert oder vorinstalliert ist, Bestimmen, ob die mobile Sicherheitsanwendung (140) aktiviert ist, und wenn die mobile Sicherheitsanwendung (140) nicht aktiviert ist, Aktivieren der mobilen Sicherheitsanwendung (140);
wenn die mobile Sicherheitsanwendung (140) nicht auf der mobilen Vorrichtung installiert oder vorinstalliert ist, Installieren und Aktivieren der mobilen Sicherheitsanwendung (140);
Übertragen des Objekts durch das Sicherheitsmodul (120) an die mobile Sicherheitsanwendung (140), um eine Virenprüfung des Objekts durchzuführen;
wenn die mobile Sicherheitsanwendung (140) installiert, aber nicht aktiviert ist und keine Option zur Aktivierung vorhanden ist, Durchführen einer Virenprüfung des Objekts unter Verwendung des Sicherheitsmoduls (120) der Drittanbieteranwendung (110);
Übertragen der Ergebnisse der Virenprüfung durch das Sicherheitsmodul (120) an das Schutzmodul (115) der Drittanbieteranwendung (110);
Auswählen mindestens einer Reaktionsmaßnahme durch das Schutzmodul (115) auf der Grundlage des Ergebnisses der Virenprüfung; und
Anwenden mindestens einer ausgewählten Reaktionsmaßnahme durch das Sicherheitsmodul (120).

10. System nach Anspruch 9, wobei der Befehl zur Durchführung einer Virenprüfung des Objekts nach dem Erkennen einer verdächtigen Aktivität erhalten wird und wobei die verdächtige Aktivität mit mindestens einem Objekt in Verbindung steht.

11. System nach einem der Ansprüche 9 bis 10, wobei die verdächtige Aktivität unter Verwendung des Schutzmoduls mithilfe von Verhaltensblockern oder Mustern gefährlichen Anwendungsverhaltens erkannt wird.

12. System nach einem der Ansprüche 9 bis 11, wobei der Befehl zur Durchführung der Antivirenprüfung des Objekts mindestens die folgenden Informationen umfasst: einen Speicherort des Objekts und einen Namen des Objekts.

13. System nach einem der Ansprüche 9 bis 12, wobei das Objekt zur Durchführung der Virenprüfung mindestens eines umfasst von:
einer Datei;
einem Link;
einem Nachrichtentext;
einem Spam-E-Mail; und
einem Netzwerkpaket.

14. System nach einem der Ansprüche 9 bis 13, wobei die Aktivierung und Installation der mobilen Sicherheitsanwendung (140) auf eine der folgenden Weisen durchgeführt wird:
durch Bereitstellen einer Aufforderung an einen Benutzer der mobilen Vorrichtung;
gemäß einer Gruppenrichtlinie der mobilen Vorrichtung; und
im automatischen Modus bei der Installation der Drittanbieteranwendung.

15. System nach einem der Ansprüche 9 bis 14, wobei die mindestens eine Reaktionsmaßnahme darauf abzielt, die Drittanbieteranwendung (110) der mobilen Vorrichtung (102) zu sichern, und mindestens eines von Folgendem umfasst:
Entfernen eines schädlichen Objekts;
Ändern der Zugriffsrechte auf das schädliche Objekt;
Einordnen des schädlichen Objekts in eine Spam-Kategorie;
Warnen eines Benutzers vor dem Vorhandensein des schädlichen Objekts auf der mobilen Vorrichtung;
Isolieren des schädlichen Objekts;
Blockieren des eingehenden Datenverkehrs nach IP-Adresse;
Trennen der mobilen Vorrichtung vom Internet;
Informationsunterstützung für den Benutzer der mobilen Vorrichtung, wenn das schädliche Objekt erkannt wird;
Ändern der Einstellungen der mobilen Sicherheitsanwendung auf der mobilen Vorrichtung;
Blockieren eines Klicks auf einen Phishing-Link;
Aktualisieren eines Betriebssystems oder Zurücksetzen eines Betriebssystems der mobilen Vorrichtung auf die Werkseinstellungen; und
Aktualisieren der Drittanbieteranwendung (110) auf eine neueste Version.

## Revendications

1. Procédé mis en œuvre par ordinateur pour l'analyse antivirus d'objets sur un dispositif mobile (102), effectué par une application de sécurité mobile (140) et une application tierce (110), toutes deux exécutées sur le dispositif mobile (102), dans lequel l'application tierce (110) comprend un module de protection (115) et un module de sécurité (120), le procédé comprenant :
recevoir, par le module de sécurité (120) de l'application tierce, une commande du module de protection (115) de l'application tierce (110), pour effectuer une analyse antivirus d'un objet à l'aide du module de sécurité (120) ;
vérifier, par le module de sécurité (120), si l'application de sécurité mobile (140) est installée ou préinstallée sur le dispositif mobile (102) ;
lorsque l'application de sécurité mobile (140) est installée ou préinstallée, déterminer si l'application de sécurité mobile (140) est activée, et lorsque l'application de sécurité mobile (140) n'est pas activée, activer l'application de sécurité mobile (140) ;
lorsque l'application de sécurité mobile (140) n'est pas installée ou préinstallée sur le dispositif mobile (102), installer et activer l'application de sécurité mobile (140) ;
transmettre, par le module de sécurité (120), l'objet à l'application de sécurité mobile (140) pour effectuer un analyse antivirus de l'objet ;
lorsque l'application de sécurité mobile (140) est installée mais non activée, et qu'il n'y a pas d'option d'activation, effectuer une analyse antivirus de l'objet à l'aide du module de sécurité (120) de l'application tierce (110) ;
transmettre, par le module de sécurité (120), les résultats de l'analyse antivirus au module de protection (115) de l'application tierce (110) ;
sélectionner, par le module de protection (115), au moins une mesure de réponse basée sur le résultat de l'analyse antivirus ; et
appliquer, par le module de sécurité (120), au moins une mesure de réponse sélectionnée.

2. Procédé selon la revendication 1, dans lequel la commande pour effectuer un analyse antivirus de l'objet est obtenue après la détection d'une activité suspecte et dans lequel l'activité suspecte est associée à au moins un objet.

3. Procédé selon la revendication 2, dans lequel l'activité suspecte est détectée à l'aide du module de protection (115) en utilisant des bloqueurs de comportement ou des modèles de comportement d'application dangereux.

4. Procédé selon l'une quelconque des revendications 1 à 3, dans lequel la commande pour effectuer l'analyse antivirus de l'objet comprend au moins les informations suivantes : un emplacement de l'objet et un nom de l'objet.

5. Procédé selon l'une quelconque des revendications 1 à 4, dans lequel l'objet pour effectuer l'analyse antivirus comprend au moins l'un des éléments suivants :
un fichier ;
un lien ;
un message texte ;
un courrier indésirable ; et
un paquet réseau.

6. Procédé selon l'une quelconque des revendications 1 à 5, dans lequel l'activation et l'installation de l'application de sécurité mobile (140) sont effectuées de l'une des manières suivantes :
en fournissant une demande à un utilisateur de l'appareil mobile ;
conformément à une politique de groupe de l'appareil mobile ; et
en mode automatique lors de l'installation de l'application tierce.

7. Procédé selon l'une quelconque des revendications 1 à 6, dans lequel l'analyse antivirus de l'objet est effectué en utilisant au moins l'un des éléments suivants :
une interaction avec un service de sécurité cloud (160) ; et
une base de données (145) située dans l'application de sécurité mobile (140).

8. Procédé selon l'une quelconque des revendications 1 à 7, dans lequel l'au moins une mesure de réponse vise à sécuriser l'application tierce (110) du dispositif mobile (102) et comprend au moins l'un des éléments suivants :
suppression d'un objet malveillant ;
modifier les droits d'accès à l'objet malveillant ;
placer l'objet malveillant dans une catégorie de spam ;
avertir un utilisateur de la présence de l'objet malveillant sur l'appareil mobile ;
mettre en quarantaine l'objet malveillant ;
bloquer le trafic entrant par adresse IP ;
déconnecter l'appareil mobile d'Internet ;
support d'information pour l'utilisateur de l'appareil mobile lorsque l'objet malveillant est détecté ;
modifier les paramètres de l'application de sécurité mobile (140) sur l'appareil mobile ;
bloquer un clic sur un lien d'hameçonnage ;
mettre à jour un système d'exploitation ou rétablir un système d'exploitation de l'appareil mobile aux paramètres d'usine ; et
mettre à jour l'application tierce (110) vers une dernière version.

9. Système d'analyse antivirus d'objets sur un dispositif mobile (102), comprenant une application tierce (110) et une application de sécurité mobile (140), fonctionnant toutes deux sur le dispositif mobile (102), dans lequel l'application tierce (110) comprend un module de protection (115) et un module de sécurité (120), le système comprenant :
au moins une mémoire ; et
au moins un processeur matériel couplé à la ou aux mémoires et configuré, individuellement ou en combinaison, pour :
recevoir, par le module de sécurité (120), une instruction provenant du module de protection (115) de l'application tierce (110), pour effectuer une analyse antivirus d'un objet à l'aide du module de sécurité (120) ;
vérifier, par le module de sécurité (120), si l'application de sécurité mobile (140) est installée ou pré-installée sur le dispositif mobile ;
lorsque l'application de sécurité mobile (140) est installée ou pré-installée, déterminer si l'application de sécurité mobile (140) est activée, et lorsque l'application de sécurité mobile (140) n'est pas activée, activer l'application de sécurité mobile (140) ;
lorsque l'application de sécurité mobile (140) n'est pas installée ou pré-installée sur le dispositif mobile, installer et activer l'application de sécurité mobile (140) ;
transmettre, par le module de sécurité (120), l'objet à l'application de sécurité mobile (140) pour effectuer un analyse antivirus de l'objet ;
lorsque l'application de sécurité mobile (140) est installée mais non activée, et qu'il n'y a pas d'option d'activation, effectuer une analyse antivirus de l'objet à l'aide du module de sécurité (120) de l'application tierce (110) ;
transmettre, par le module de sécurité (120), les résultats de l'analyse antivirus au module de protection (115) de l'application tierce (110) ;
sélectionner, par le module de protection (115), au moins une mesure de réponse basée sur le résultat de l'analyse antivirus ; et
appliquer, par le module de sécurité (120), au moins une mesure de réponse sélectionnée.

10. Système selon la revendication 9, dans lequel la commande pour effectuer une analyse antivirus de l'objet est obtenue après la détection d'une activité suspecte et dans lequel l'activité suspecte est associée à au moins un objet.

11. Système selon l'une quelconque des revendications 9 à 10, dans lequel l'activité suspecte est détectée à l'aide du module de protection utilisant des bloqueurs de comportement ou des modèles de comportement d'application dangereux.

12. Système selon l'une quelconque des revendications 9 à 11, dans lequel la commande pour effectuer le balayage antivirus de l'objet comprend au moins les informations suivantes : un emplacement de l'objet et un nom de l'objet.

13. Système selon l'une quelconque des revendications 9 à 12, dans lequel l'objet pour effectuer l'analyse antivirus comprend au moins l'un des éléments suivants :
un fichier ;
un lien ;
un message texte ;
un courrier indésirable ; et
un paquet réseau.

14. Système selon l'une quelconque des revendications 9 à 13, dans lequel l'activation et l'installation de l'application de sécurité mobile (140) sont effectuées de l'une des manières suivantes :
en fournissant une demande à un utilisateur de l'appareil mobile ;
conformément à une politique de groupe de l'appareil mobile ; et
en mode automatique lors de l'installation de l'application tierce.

15. Système selon l'une quelconque des revendications 9 à 14, dans lequel l'au moins une mesure de réponse vise à sécuriser l'application tierce (110) du dispositif mobile (102) et comprend au moins l'un des éléments suivants :
suppression d'un objet malveillant ;
modifier les droits d'accès à l'objet malveillant ;
placer l'objet malveillant dans une catégorie de spam ;
avertir un utilisateur de la présence de l'objet malveillant sur l'appareil mobile ;
mettre en quarantaine l'objet malveillant ;
bloquer le trafic entrant par adresse IP ;
déconnecter l'appareil mobile d'Internet ;
support d'information pour l'utilisateur de l'appareil mobile lorsque l'objet malveillant est détecté ;
modifier des paramètres de l'application de sécurité mobile sur le dispositif mobile ;
bloquer un clic sur un lien d'hameçonnage ;
mettre à jour un système d'exploitation ou rétablir un système d'exploitation de l'appareil mobile aux paramètres d'usine ; et
mettre à jour l'application tierce (110) vers une dernière version.
